# EUROPEAN PATENT APPLICATION

(11) **EP 4 659 914 A1**
(43) Date of publication of application: **10.12.2025**
(21) Application number: 24849337.1
(22) Date of filing: 20.05.2024
(51) Int. Cl.: B25J 13/08, B25J 9/16, B25J 5/00, B25J 11/00, B25J 13/00, B25J 19/02, G06V 10/20, G06T 7/50, G06T 7/62

(54) **MOVING ROBOT AND METHOD FOR CONTROLLING MOVING ROBOT**

(30) Priority: 31.07.2023 KR 20230099886
(71) Applicant: Samsung Electronics Co., Ltd., Suwon-si, Gyeonggi-do 16677 (KR)
(72) Inventor: RYU, Minwoo, Suwon-si Gyeonggi-do 16677 (KR); YOON, Jinwook, Suwon-si Gyeonggi-do 16677 (KR); KIM, Taegyu, Suwon-si Gyeonggi-do 16677 (KR); JUNG, Euihyun, Suwon-si Gyeonggi-do 16677 (KR); HA, Jihoon, Suwon-si Gyeonggi-do 16677 (KR)
(74) Representative: Walaski, Jan Filip
(86) International application number: PCT/KR2024/006787
(87) International publication number: WO 2025/028765

(57) **Abstract**

A mobile robot and a method performed by the mobile robot are provided. The mobile robot includes a main body, a plurality of wheels mounted on the main body, a blade mounted on the main body to cut grass, an optical sensor configured to generate an image with a field of view facing a front of the main body, a user interface configured to obtain a user input and provide information about an operation of the mobile robot, and at least one processor. The at least one processor is configured to identify a plurality of objects from the image obtained while the main body moves, determine an object detected for a predetermined period of time among the plurality of identified objects to be a contaminant, determine a degree of contamination of the optical sensor based on a characteristic of the contaminant and a location of the contaminant in the image, provide information corresponding to the degree of contamination of the optical sensor via the user interface, and determine an operation mode of the mobile robot based on the degree of contamination of the optical sensor.

## Description

### [TECHNICAL FIELD]

The disclosure relates to a mobile robot capable of cutting grass in a work area while moving across the work area, and docking to a charging station after the grass cutting is completed, and a control method of the mobile robot.

### [BACKGROUND ART]

Robots have been developed for industrial purposes and have been a part of factory automation. Recently, the application of robots has expanded to include medical robots, aerospace robots, service robots, and the like, and domestic robots for use at home are also being produced. Among the robots, robots capable of autonomously driving are referred to as mobile robots (moving robots).

A representative example of mobile robot is a robotic lawn mower used to mow and trim grass in residential yards, golf courses, and playgrounds. The mobile robot includes wheels and a blade, and may rotate the wheels to move over the work area and rotate the blade to cut the top of the grass.

As such, unlike indoor mobile robots, mobile robots used outdoors are vulnerable to contamination and physical damage from external environmental factors. For example, an optical sensor included in a mobile robot may easily become contaminated. Contamination of the optical sensor may cause the mobile robot to misidentify objects in front of the mobile robot or to be unable to detect obstacles, causing the mobile robot to operate incorrectly.

### [DISCLOSURE]

### [Technical Solution]

Aspect of the disclosure is to provide a mobile robot that detects contamination of an optical sensor exposed to an external environment and take appropriate action in response to the contamination of the optical sensor, and a control method and system for the mobile robot.

In accordance with an aspect of the disclosure, a mobile robot is provided. The mobile robot includes a main body, a plurality of wheels mounted on the main body, a blade mounted on the main body to cut grass, an optical sensor configured to generate an image with a field of view facing a front of the main body, a user interface configured to obtain a user input and provide information about an operation of the mobile robot; and a controller. The controller may be configured to identify a plurality of objects from the image obtained while the main body moves. The controller may be configured to determine an object detected for a predetermined period of time among the plurality of identified objects to be a contaminant. The controller may be configured to determine a degree of contamination of the optical sensor based on a characteristic of the contaminant and a location of the contaminant in the image. The controller may be configured to provide information corresponding to the degree of contamination of the optical sensor via the user interface. The controller may be configured to determine an operation mode of the mobile robot based on the degree of contamination of the optical sensor.

In accordance with another aspect of the disclosure, a method performed by a mobile robot is provided. The method includes detecting a plurality of objects from an image obtained by an optical sensor of the mobile robot while the mobile robot moves, the image having a field of view facing a front of a main body of the mobile robot, determining an object detected for a predetermined period of time among the plurality of objects to be a contaminant, determining a degree of contamination of the optical sensor based on a characteristic of the contaminant and a location of the contaminant in the image, providing information corresponding to the degree of contamination of the optical sensor via an user interface of the mobile robot, and determining an operation mode of the mobile robot based on the degree of contamination of the optical sensor.

According to an embodiment of the disclosure, a system includes a mobile robot, a server, and a charging station. The system further includes a user device.

According to the disclosure, the mobile robot, the control method and system for the mobile robot may detect contamination of an optical sensor exposed to an external environment and take appropriate action in response to the contamination of the optical sensor. Thus, malfunctions and accidents of the mobile robot due to the contamination of the optical sensor may be prevented.

### [DESCRIPTION OF DRAWINGS]

FIG. 1 illustrates a system including a mobile robot according to an embodiment of the disclosure;
FIG. 2 illustrates a system including a mobile robot, a charging station and beacons according to an embodiment of the disclosure;
FIG. 3 is a perspective view of a mobile robot according to an embodiment of the disclosure;
FIG. 4 is a plan view of a mobile robot, viewed from below according to an embodiment of the disclosure;
FIG. 5 illustrates a cross-section of a mobile robot of FIG. 3 taken along a vertical direction according to an embodiment of the disclosure;
FIG. 6 illustrates a charging station according to an embodiment of the disclosure;
FIG. 7 is a control block diagram of a charging station according to an embodiment of the disclosure;
FIG. 8 is a control block diagram of a mobile robot according to an embodiment of the disclosure;
FIG. 9 illustrates an image obtained by a first optical sensor according to an embodiment of the disclosure;
FIG. 10 illustrates an image obtained by a second optical sensor according to an embodiment of the disclosure;
FIG. 11 illustrates an image generated by an optical sensor being divided into a plurality of regions according to an embodiment of the disclosure;
FIG. 12 illustrates information being provided via a user device or a user interface of a mobile robot according to an embodiment of the disclosure;
FIG. 13 illustrates information being provided via a user device or a user interface of a mobile robot according to an embodiment of the disclosure;
FIG. 14 is a flowchart illustrating a control method of a mobile robot according to an embodiment of the disclosure;
FIG. 15 is a flowchart illustrating a method of determining a degree of contamination of an optical sensor described in FIG. 14 according to an embodiment of the disclosure;
FIG. 16 is a flowchart illustrating an operation of a mobile robot according to a degree of contamination of an optical sensor described in FIG. 14 according to an embodiment of the disclosure; and
FIG. 17 illustrates a further embodiment of a method for estimating a contaminant in an image described in FIG. 14 according to an embodiment of the disclosure.

### [MODES OF THE DISCLOSURE]

The various embodiments of this document and the terms and words used therein are not intended to limit the technical features described in this document to specific embodiments, but should be understood to include various modifications, equivalents, or substitutes of the corresponding embodiments.

In relation to the description of the drawings, similar reference numerals may be used for similar or related components.

It is to be understood that the singular forms "a," "an," and "the" include plural referents unless the context clearly indicates otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

It will be understood that the terms "first", "second", or the like, may be used only to distinguish one component from another, not intended to limit the corresponding component in other aspects (e.g., importance or order).

When it is said that one (e.g., first) component is "coupled" or "connected" to another (e.g., second) component, with or without the terms "functionally" or "communicatively", it means that one component may be connected to the other component directly (e.g., by wire), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it may be directly on the other component or intervening components may also be present.

The term "and/or" includes any and all combinations of one or more of a plurality of associated listed items.

Hereinafter, an operation principle and embodiments of the disclosure is described with reference to the accompanying drawings.

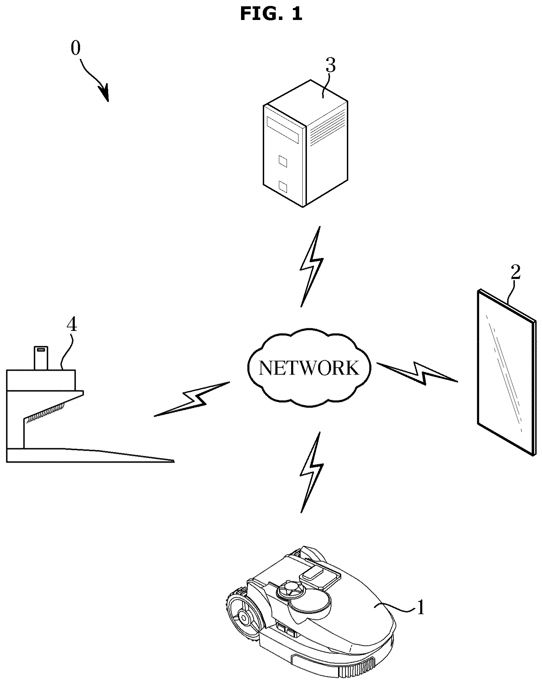

FIG. 1 illustrates a system including a mobile robot according to an embodiment of the disclosure.

Referring to FIG. 1, a system 0 according to an embodiment of the disclosure may include a mobile robot 1, a user device 2, a server 3, and a charging station 4.

The mobile robot 1 may include a communication module capable of communicating with the user device 2, the server 3, and the charging station 4, respectively, a user interface receiving a user input or outputting information to a user, at least one processor controlling an operation of the mobile robot 1, and at least one memory storing a program for controlling the operation of the mobile robot 1.

The server 3 may include a communication module capable of communicating with the mobile robot 1, another server, the user device 2, and the charging station 4, respectively. The server 3 may include at least one processor processing data received from the mobile robot 1, the other server, the user device 2, and the charging station 4, and at least one memory storing programs for processing data or processed data. The server 3 may be implemented as a variety of computing devices, such as a workstation, a cloud, a data drive, a data station, and the like. The server 3 may be implemented as one or more server physically or logically separated based on a function, detailed configuration of function, or data, and may transmit and receive data through communication between servers and process the transmitted and received data.

The server 3 may perform functions, such as managing a user account, registering the mobile robot 1 in association with the user account, managing or controlling the registered mobile robot 1. For example, a user may access the server 3 via the user device 2 and may generate a user account. The user account may be identified by an identifier (ID) and a password set by the user. The server 3 may register the mobile robot 1 to the user account according to a predetermined procedure. For example, the server 3 may link identification information of the mobile robot 1 (such as a serial number or MAC address) to the user account to register, manage, and control the mobile robot 1.

The user device 2 may include a communication module capable of communicating with the mobile robot 1, the server 3, and the charging station 4, respectively. The user device 2 may include a user interface receiving a user input or outputting information to a user. The user device 2 may include at least one processor controlling an operation of the user device 2, and at least one memory storing a program for controlling the operation of the user device 2.

The user device 2 may be carried by a user, or placed in a user's home or office, or the like. The user device 2 may include a personal computer, a terminal, a portable telephone, a smartphone, a handheld device, a wearable device, a display, and the like, without being limited thereto.

The memory of the user device 2 may store a program for controlling other mobile robot 1, i.e., an application. The application may be sold installed on the user device 2, or may be downloaded from an external server for installation.

By executing the application installed on the user device 2 by a user, the user may access the server 3, generate a user account, and perform communication with the server 3 based on the login user account to register the mobile robot 1.

For example, by operating the mobile robot 1 to enable the mobile robot 1 to access the server 3 according to a procedure guided by the application installed on the user device 2, the server 3 may register the mobile robot 1 with the user account by assigning the identification information (such as a serial number or MAC address) of the mobile robot 1 to the corresponding user account.

A user may control the mobile robot 1 using the application installed on the user device 2. For example, by logging into a user account with the application installed on the user device 2, the mobile robot 1 registered in the user account appears, and by inputting a control command for the mobile robot 1, the user device 2 may transmit a control command to the mobile robot 1 via the server 3.

A network may include both a wired network and a wireless network. The wired network may include a cable network or a telephone network, and the wireless network may include any networks transmitting and receiving a signal via radio waves. The wired network and the wireless network may be connected to each other.

The network may include a wide area network (WAN), such as the Internet, a local area network (LAN) formed around an access point (AP), and a short range wireless network not using an AP. The short range wireless network may include Bluetooth^{™} (institute of electrical and electronics engineers (IEEE) 802.15.1), Zigbee (IEEE 802.15.4), wireless fidelity (Wi-Fi) direct, near field communication (NFC), and Z-Wave, without being limited thereto.

The AP may connect the mobile robot 1, the user device 2, or the charging station 4 to a WAN connected to the server 3. The mobile robot 1, the user device 2, or the charging station 4 may be connected to the server 3 via a WAN.

The AP may communicate with the mobile robot 1, the user device 2, or the charging station 4 using wireless communication, such as wi-fi^{™} (IEEE 802.11), Bluetooth^{™} (IEEE 802.15.1), Zigbee (IEEE 802.15.4), or the like, and access a WAN using wired communication, without being limited thereto.

According to various embodiments of the disclosure, the mobile robot 1 may be directly connected to the user device 2, the server 3, or the charging station 4 without going through an AP. The mobile robot 1 may be connected to the user device 2, the server 3, or the charging station 4 via a long range wireless network or a short range wireless network.

For example, the mobile robot 1 may be connected to the user device 2 via a short range wireless network (e.g., wi-fi direct). In another example, the mobile robot 1 may be connected to the user device 2, the server 3, or the charging station 4 via a WAN using a long range wireless network (e.g., a cellular communication module).

In still another example, the mobile robot 1 may access a WAN using wired communication, and may be connected to the user device 2, the server 3, or the charging station 4 via a WAN. Upon accessing a WAN using wired communication, the mobile robot 1 may also act as an access point.

The mobile robot 1 may transmit information about an operation or state to the user device 2, the server 3, or the charging station 4 via the network. For example, the mobile robot 1 may transmit information about an operation or state to the user device 2, the server 3, or the charging station 4 upon receiving a request from the server 3, in response to an event in the mobile robot 1, or periodically or in real time.

In response to receiving the information about the operation or state from the mobile robot 1, the server 3 may update the stored information about the operation or state of the mobile robot 1, and may transmit the updated information about the operation and state of the mobile robot 1 to the user device 2 via the network. Here, updating the information may include various operations in which existing information is changed, such as adding new information to the existing information, replacing the existing information with new information, and the like.

The mobile robot 1 may obtain various information from the user device 2, the server 3, or the charging station 4, and may provide the obtained information to a user. For example, the mobile robot 1 may obtain information related to a function of the mobile robot 1 from the server 3 and various environment information (e.g., weather, temperature, humidity, or the like), and may output the obtained information via the user interface.

The mobile robot 1 may operate according to a control command received from the user device 2, the server 3 or the charging station 4. For example, the mobile robot 1 may operate in accordance with a control command received from the server 3, based on a prior authorization obtained from a user to operate in accordance with the control command of the server 3 even without a user input. Here, the control command received from the server 3 may include a control command input by the user via the user device 2 or a control command based on preset conditions, without being limited thereto.

The user device 2 may transmit information about a user to the mobile robot 1, the server 3, or the charging station 4 through the communication module. For example, the user device 2 may transmit information about a user's location, a user's health status, a user's preference, a user's schedule, or the like, to the server 3. The user device 2 may transmit information about the user to the server 3 based on the user's prior authorization.

The mobile robot 1, the user device 2, the server 3, or the charging station 4 may use artificial intelligence to determine a control command. For example, the server 3 may process information about an operation or a state of the mobile robot 1 and information about a user of the user device 2 using techniques, such as artificial intelligence (AI), and may transmit a processing result or a control command to the mobile robot 1 or the user device 2 based on the processing result.

The mobile robot 1 may include a robot capable of autonomous driving. Hereinafter, the mobile robot 1 may be exemplified as a robot for cutting grass.

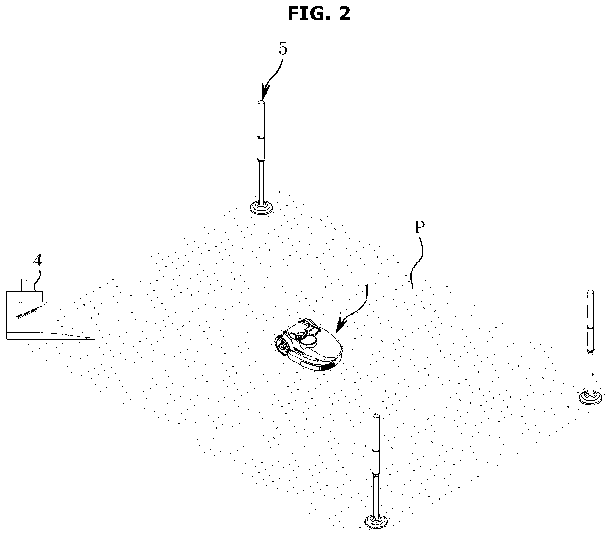

FIG. 2 illustrates a system including a mobile robot, a charging station and beacons according to an embodiment of the disclosure.

Referring to FIG. 2, the mobile robot 1 may move across a lawn. The lawn may be a work area P of the mobile robot 1. Beacons 5 and a charging station 4 may be disposed at each boundary region of the work area P. The system 0 according to an embodiment may further include additional beacons.

The work area may be formed in a polygonal shape by the plurality of beacons 5 and the charging station 4. For example, as shown, the work area P may be formed in a rectangle by three beacons and the charging station 4. In another example, the work area P may be formed in a pentagon by four beacons and the charging station 4. As such, the work area may have various shapes, and the shape of the work area may vary depending on the number of beacons.

The mobile robot 1 may communicate with the plurality of beacons 5 and the charging station 4. The mobile robot 1 may receive a signal from at least one of the plurality of beacons 5, and may transmit a signal to at least one of the plurality of beacons 5. The mobile robot 1 may receive a signal from the charging station 4, and may transmit a signal to the charging station 4.

A signal generated by the at least one beacon 5 may be an ultra-wideband (UWB) communication signal, and the signal transmitted by the at least one beacon 5 to the mobile robot 1 may include location information of the at least one beacon 5. A signal generated by the charging station 4 may be a UWB communication signal. The signal transmitted by the charging station 4 to the mobile robot 1 may include location information of the charging station 4.

The plurality of beacons 5 may communicate with each other, and may communicate with the charging station 4. Each of the plurality of beacons 5 and the charging station 4 may obtain a relative coordinate between the plurality of beacons 5 and the charging station 4, and may measure a UWB communication distance with the mobile robot 1. Each of the beacons 5 and the charging station 4 may obtain a location of the mobile robot 1 within the measured relative coordinate system through triangulation.

The mobile robot 1 may measure a direction and a transmission distance of a signal triggered from each beacon 5 disposed at each of a plurality of points, and may obtain current location information of the mobile robot 1 in the work area P based on the measured direction and distance of the signal. In addition, the mobile robot 1 may measure a direction and a transmission distance of a signal triggered from the charging station 4, and may obtain current location information of the mobile robot 1 in the work area P based on the measured direction and distance of the signal.

The mobile robot 1 may include a separate position sensor for obtaining current location information of the mobile robot 1. For example, the position sensor may include a global positioning system (GPS) receiver.

The mobile robot 1 may set boundaries of the work area P based on signals transmitted from the charging station 4 and the beacons 5. The charging station 4 may also set the boundaries of the work area P. The mobile robot 1 may move within the set work area P.

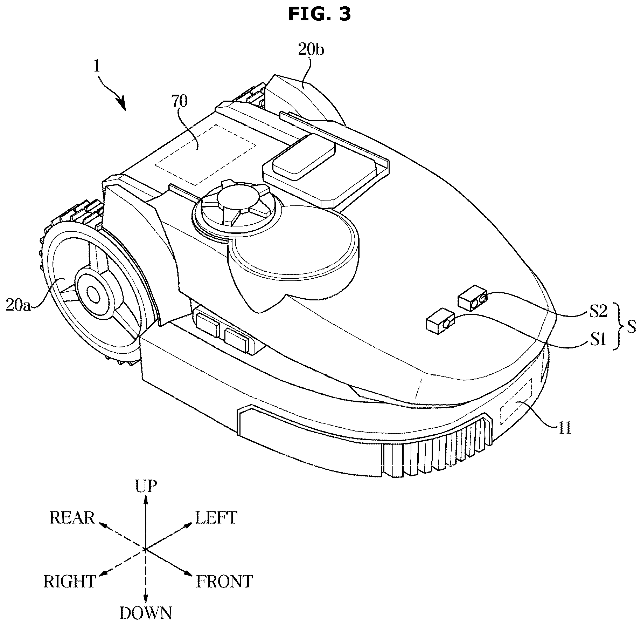

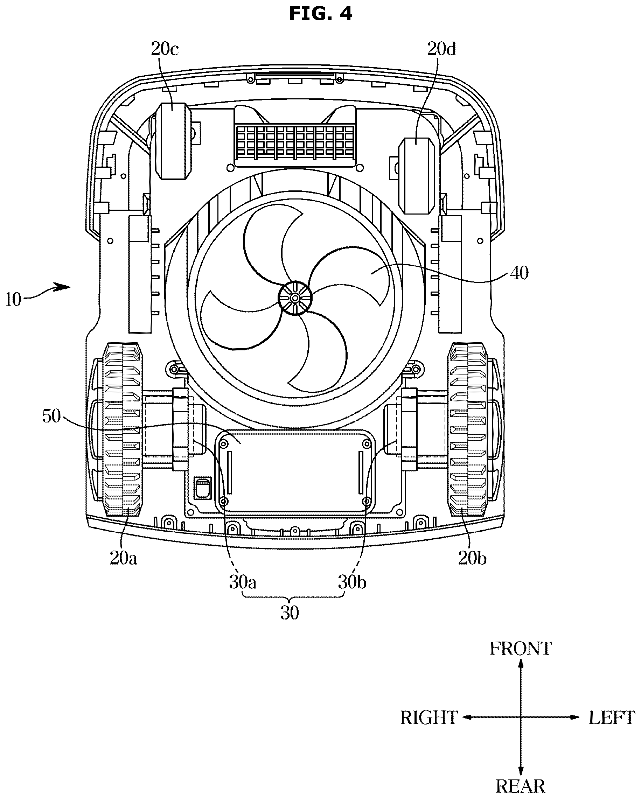

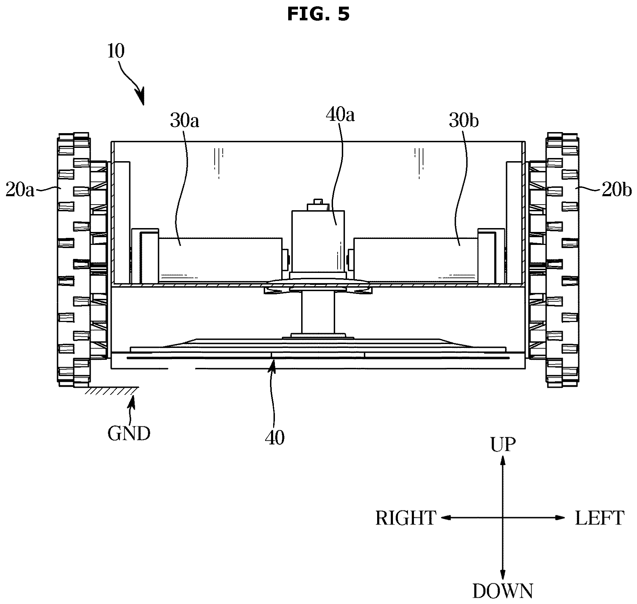

FIG. 3 is a perspective view of a mobile robot according to an embodiment of the disclosure. FIG. 4 is a plan view of a mobile robot viewed from below according to an embodiment of the disclosure. FIG. 5 illustrates a cross-section of a mobile robot of FIG. 3 taken along a vertical direction according to an embodiment of the disclosure.

The terms "front," "rear," "upper," "lower," "left," and "right" used in the following description are defined based on a forward movement direction of the mobile robot 1, and a shape and a position of each component are not limited by these terms. In addition, such terms are used to describe the disclosure for clear understanding, and each direction may be defined differently.

Referring to FIGS. 3, 4, and 5, the mobile robot 1 may include a main body 10, and a plurality of wheels 20a, 20b, 20c and 20d that are rotatable about an axis horizontal to the ground and move the main body 10. The main body 10 may include a case forming an exterior. The plurality of wheels 20a, 20b, 20c and 20d may include the first driving wheel 20a, the second driving wheel 20b, the first auxiliary wheel 20c, and the second auxiliary wheel 20d.

The first driving wheel 20a may be provided on a rear right side of the main body 10. The second driving wheel 20b may be provided on a rear left side of the main body 10. The first auxiliary wheel 20c may be provided on a front right side of the main body 10. The second auxiliary wheel 20d may be provided on a front left side of the main body 10.

The first driving wheel 20a is connected to a first wheel motor 30a. The first wheel motor 30a may generate rotational force to rotate the first driving wheel 20a. The second driving wheel 20b is connected to a second wheel motor 30b. The second wheel motor 30b may generate rotational force to rotate the second driving wheel 20b. A rotation speed of each of the first driving wheel 20a and the second driving wheel 20b may be adjusted according to a rotation speed of each of the first wheel motor 30a and the second wheel motor 30b.

An optical sensor S may be provided in the front of the main body 10. The optical sensor S may generate an image with a field of view (FOV) facing the front of the main body 10. A position of the optical sensor S is not limited to the front of the main body 10. The optical sensor S may be located at various positions to capture images of the surroundings of the mobile robot 1. The optical sensor S may be provided on the side and/or rear of the main body 10.

The optical sensor S may include various sensors that generate image data by collecting light incident from the outside. For example, the optical sensor S may include at least one of a first optical sensor S1 generating a color image and a second optical sensor S2 generating a depth image including distance information to a target.

The first optical sensor S1 may include an RGB camera that collects visible light and generates a color image. The second optical sensor S2 may include a binocular camera or a stereo camera. The second optical sensor S2 may obtain depth information to the target using a binocular disparity. The second optical sensor S2 may include a binocular infrared camera. A first FOV of the first optical sensor S1 and a second FOV of the second optical sensor S2 may be different from each other.

The optical sensor S is not limited to the above example. For example, the optical sensor S may include a variety of sensors, such as a light detection and ranging (Lidar) sensor, a time-of-flight (ToF) sensor, and an RGB-D camera.

A user interface 70 may be provided on a portion of an upper surface of the main body 10. In FIG. 2, the user interface 70 is illustrated as being provided on a rear upper surface of the main body 10, but the disclosure is not limited thereto. The user interface 70 may obtain a user input. The user interface 70 may provide various information about an operation of the mobile robot 1. As will be described later, the user interface 70 may include a display 71, a speaker 72, an indicator 73, and an inputter 74.

The mobile robot 1 may include a blade 40 for cutting grass. The blade 40 may be provided in a circular fan shape. The blade 40 may be provided in a lower portion of the main body 10, and may be rotatable about an axis perpendicular to the ground. The blade 40 is connected to a blade motor 40a. The blade motor 40a may generate rotational force to rotate the blade 40. A rotation axis of the blade motor 40a may be perpendicular to a rotation axis of the wheel motor 30.

The blade 40 may move along a vertical direction of the main body 10. The blade 40 may be spaced apart from the ground GND. As the blade 40 moves up and down, a gap between the ground GND and the blade 40 may be adjusted. A height of the grass to be cut may be adjusted according to the up and down movement of the blade 40.

A charging terminal 11 for charging a battery 50 may be provided on the front of the main body 10. The charging terminal 11 of the mobile robot 1 may be connected to a charger 440 of the charging station 4. By docking the mobile robot 1 to the charging station 4, the charging terminal 11 may be electrically connected to the charger 440 of the charging station 4, and the battery 50 of the mobile robot 1 may be charged by power supplied from the charger 440. The battery 50 may supply power to various electronic components included in the mobile robot 1.

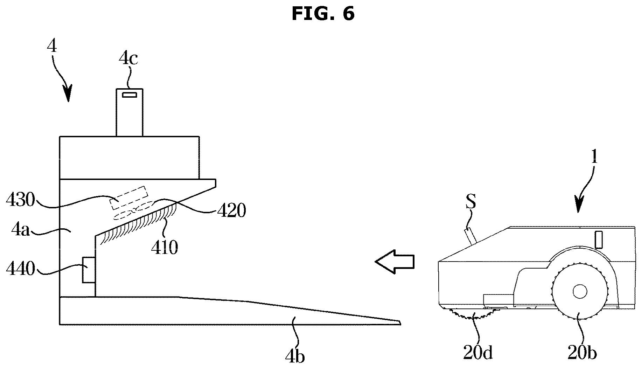

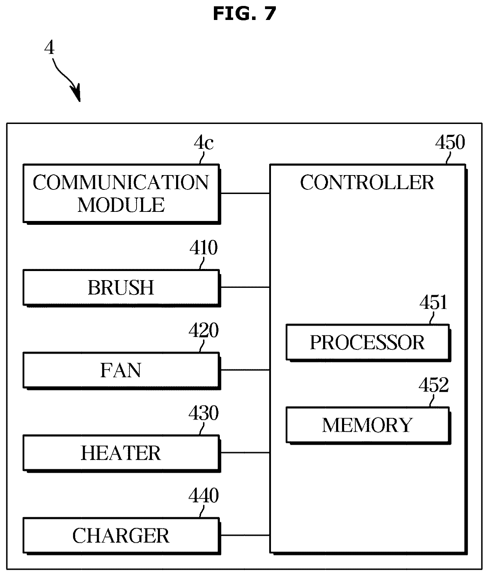

FIG. 6 illustrates a charging station according to an embodiment of the disclosure. FIG. 7 is a control block diagram of a charging station according to an embodiment of the disclosure.

Referring to FIGS. 6 and 7, the charging station 4 may include a communication module 4c and the charger 440. In addition, the charging station 4 may further include at least one of a brush 410, a fan 420, or a heater 430. A controller 450 of the charging station 4 may include a processor 451 and memory 452.

The charging station 4 may communicate with the mobile robot 1, the user device 2 and/or the beacons 5 via the communication module 4c. The communication module 4c may include a communication circuit for performing various wireless communications. For example, the communication module 4c may support ultra-wideband communication.

The charging station 4 may include a housing 4a and a support 4b supporting the housing 4a. The support 4b may provide a travel path for the mobile robot 1 to dock with the charging station 4. The mobile robot 1 may reach an exact charging position by moving along the support 4b.

The charging station 4 may supply power to charge the battery 50 of the mobile robot 1. The charging station 4 may be connected to a commercial power source, receive power from the commercial power source, perform conversion of the supplied power, and then provide the converted power to the mobile robot 1. Upon docking of the mobile robot 1 to the charging station 4, the charging station 4 may convert commercial power into power for charging the battery 50 of the mobile robot 1.

The charging station 4 may include a configuration for removing a contaminant attached to the optical sensor S of the mobile robot 1. For example, the charging station 4 may include the brush 410 that comes into contact with the optical sensor S of the mobile robot 1 as docking of the mobile robot 1 is completed. The charging station 4 may rotate the brush 410. The brush 410 that is rotating may apply frictional force to a portion in contact with the optical sensor S, and the contaminant attached to the optical sensor S may be removed by the frictional force.

In addition, the charging station 4 may include the fan 420 generating wind and the heater 430 generating heat. The wind generated by rotation of the fan 420 may remove the contaminant attached to the optical sensor S. The heat generated by the heater 430 may also help remove the contaminant attached to the optical sensor S. By operating the fan 420 and the heater 430 together, hot air may be supplied to the optical sensor S of the mobile robot 1.

Although not shown, a marker for docking of the mobile robot 1 may be provided on the housing 4a of the charging station 4. The marker may be used to determine contamination of the optical sensor S of the mobile robot 1. The marker may have various patterns (e.g., a grid pattern, a chess board pattern). The optical sensor S of the mobile robot 1 may photograph the marker of the charging station 4. In a case where a marker comes into a field of view of the optical sensor S, the mobile robot 1 may move towards the marker.

In a case where the marker is incompletely identified in an image generated by the optical sensor S, the mobile robot 1 may determine that the optical sensor S is contaminated. In addition, the mobile robot 1 may determine a degree of contamination of the optical sensor S according to a size and shape of the marker identified in the image generated by the optical sensor S. In determining the degree of contamination of the optical sensor S, the degree of contamination may be determined more accurately by using the marker of the charging station 4 together with a method described later.

The controller 450 of the charging station 4 may control an operation of the charging station 4. The processor 451 of the charging station 4 may perform control related to the operation of the charging station 4 using data stored in the memory 452. The controller 450 may control the communication module 4c to dock with the mobile robot 1. The controller 450 may control the charger 440 to charge the battery 50 included in the mobile robot 1. The controller 450 may set boundaries of a work area P by processing signals transmitted from the mobile robot 1 and the beacons 5. In addition, the controller 450 may operate at least one of the brush 410, the fan 420, or the heater 430 to remove the contaminant present in the optical sensor S of the mobile robot 1.

The components of the charging station 4 are not limited to those illustrated. A portion of the above-described components may be omitted or other components may be added. In addition, an arrangement structure of the components included in the charging station 4 is not limited to that shown in the drawings.

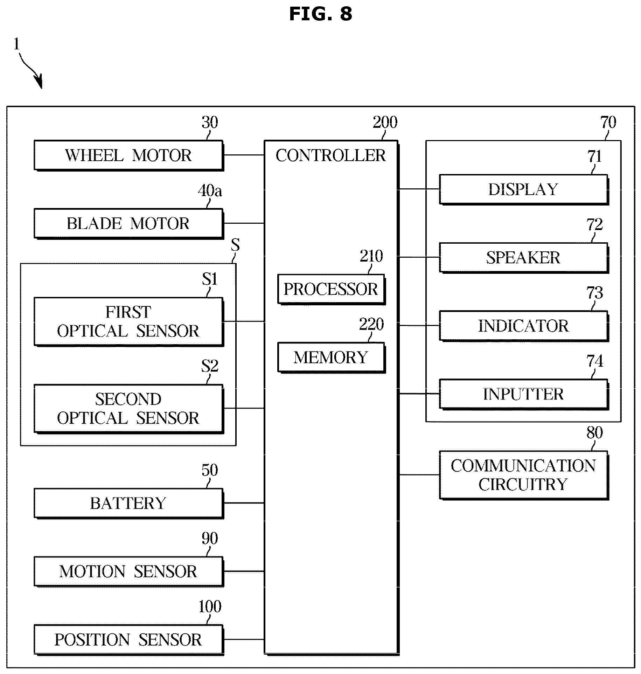

FIG. 8 is a control block diagram of a mobile robot according to an embodiment of the disclosure.

Referring to FIG. 8, the mobile robot 1 may include the wheel motor 30, the blade motor 40a, the optical sensor S, the battery 50, the user interface 70 and a controller 200. The mobile robot 1 may further include a communication circuitry 80. The mobile robot 1 may additionally include a motion sensor 90 and a position sensor 100.

The controller 200 may control components of the mobile robot 1. The controller 200 may include a processor 210 and memory 220. The processor 210 may include a logic circuit and an arithmetic circuit in hardware. The processor 210 may control the electrically connected components of the mobile robot 1 using programs, instructions and/or data stored in the memory 220 for operation of the mobile robot 1. The controller 200 may be implemented with a control circuit including circuit elements, such as a condenser, an inductor, and a resistor. The processor 210 and the memory 220 may be implemented in separate chips, or a single chip. In addition, the controller 200 may include a plurality of processors and a plurality of memories.

The memory 220 may store programs, applications, and/or data for operation of the mobile robot 1, and may store data generated by the processor 210. The memory 220 may include non-volatile memories, such as read only memory (ROM), flash memory, and the like, for long term data storage. The memory 220 may include volatile memories, such as static random access memory (S-RAM), dynamic random access memory (D-RAM) for temporarily storing data.

The wheel motor 30 may rotate the driving wheels 20a and 20b. The wheel motor 30 may include the first wheel motor 30a and the second wheel motor 30b. The first wheel motor 30a may be connected to the first driving wheel 20a, and the first driving wheel 20a may rotate according to the rotation of the first wheel motor 30a. The second wheel motor 30b may be connected to the second driving wheel 20b, and the second driving wheel 20b may rotate according to the rotation of the second wheel motor 30b. The mobile robot 1 may move by rotating the first driving wheel 20a and the second driving wheel 20b.

The blade motor 40a may be connected to the blade 40. The blade 40 may rotate according to the rotation of the blade motor 40a. The grass on the ground may be cut by the rotation of the blade 40. A drive shaft of the blade motor 40a may move in a vertical direction. By the movement of the drive shaft of the blade motor 40a in the vertical direction, a height of the blade 40 from the ground may be adjusted, and thus a height of the grass to be cut may vary.

The optical sensor S may generate an image with a field of view (FOV) facing the front of the main body 10. The image may include a plurality of image frames obtained at predetermined intervals. In other words, a video may be generated by arranging a plurality of image frames in time series. The optical sensor S may generate the image by collecting light incident from the outside. The optical sensor S may transmit image data and/or image signals corresponding to the generated image to the controller 200.

For example, the optical sensor S may include at least one of the first optical sensor S1 or the second optical sensor S2. The first optical sensor S1 may collect visible light to generate a color image. The first optical sensor S1 may include a lens and an image sensor. The second optical sensor S2 may generate a depth image including distance information to a target. The second optical sensor S2 may include a binocular infrared camera. The second optical sensor S2 may include two lenses and two image sensors. In other words, the second optical sensor S2 may include a left-eye camera and a right-eye camera. The second optical sensor S2 may generate a black and white image.

In a case where both the first optical sensor S1 and the second optical sensor S2 are provided in the main body 10, the first optical sensor S1 and the second optical sensor S2 may be provided as a single module or as separate modules.

The controller 200 may control driving of the mobile robot 1 based on the image obtained by the optical sensor S. The controller 200 may analyze the image obtained by the optical sensor S to identify various objects included in the image. The controller 200 may identify an object in the image and identify characteristics of the object using an artificial intelligence model obtained from the memory 220 or the server 3. For example, the controller 200 may identify a size, shape, brightness, clarity, transparency, location, and/or color of the object from the image. In addition, the controller 200 may estimate a distance to the object and a height of the object using depth information included in the image. The controller 200 may identify an obstacle present on a travel path of the mobile robot 1 through image processing, and may control the wheel motor 30 to avoid the obstacle.

The battery 50 may supply power to various electronic components included in the mobile robot 1. For example, the battery 50 may supply power to each of the wheel motor 30, the blade motor 40a, the optical sensor S, the user interface 70, the communication circuitry 80, the motion sensor 90, the position sensor 100, and the controller 200. The power supplied from the battery 50 may be converted by the controller 200 and then supplied to each electronic component. Upon docking of the mobile robot 1 to the charging station 4, the battery 50 may be charged by charging power provided from the charger 440 of the charging station 4.

The user interface 70 may obtain a user input. The user interface 70 may provide various information about an operation of the mobile robot 1. The user interface 70 may include the display 71, the speaker 72, the indicator 73, and the inputter 74.

The display 71 may display information related to an operation of the mobile robot 1. The display 71 may display information input by a user or information provided to the user as various screens. The display 71 may display information related to an operation of the mobile robot 1 as at least one of an image or text. For example, the display 71 may display at least one of an image or text regarding contamination of the optical sensor S. The display 71 may display battery information.

In addition, the display 71 may display a graphic user interface (GUI) that enables control of the mobile robot 1. For example, the display 71 may display a user interface element (UI element), such as an icon.

The display 71 may be provided in various types of display panels. For example, the display 71 may include a liquid crystal display (LCD) panel, a light emitting diode (LED) panel, an organic light emitting diode (OLED) panel, or a micro LED panel. The display 71 may include a touch display that serves as an input device.

The speaker 72 may output information input by a user or information provided to the user in various sounds. For example, the controller 200 may control the speaker 130 to output various sounds related to an operating state of the mobile robot 1 and contamination of the optical sensor S. In a case where the optical sensor S is contaminated, a voice message, notification sound, or warning sound notifying the contamination of the optical sensor S may be output through the speaker 72.

The indicator 73 is a status light to inform various states of the mobile robot 1. The indicator 73 may include LEDs of various colors. In response to an occurrence of a specific event related to an operation of the mobile robot 1, the indicator 73 corresponding to the specific event may emit light. For example, in response to an occurrence of contamination of the optical sensor S, the indicator 73 may emit light to inform the contamination of the optical sensor S. A user may easily confirm the current state of the mobile robot 1 through the indicator 73 emitting light.

The inputter 74 may obtain a user input. The user input may include various commands. For example, the inputter 74 may obtain a power-on command, a power-off command, an operation start command, an operation stop command, an operation continuation command, a sensor cleaning command, and a charging command. The user input may be obtained from the user device 2. The inputter 74 may transmit an electrical signal (voltage or current) corresponding to the user input to the controller 200.

The inputter 74 may include various buttons and/or dials. For example, the inputter 74 may include at least one of a power button for turning on or off the mobile robot 1, a start/stop button for starting or stopping a grass cutting operation, or a docking button for docking the mobile robot 1 to the charging station 4. The buttons may be provided as a physical button or a touch button. The display 71 and the inputter 74 may be provided separately or as a single device (e.g., a touch display).

The controller 200 may process a command received through at least one of the display 71, the inputter 74, or the user device 2 to control an operation of the mobile robot 1.

The communication circuitry 80 may be connected to at least one of the user device 2 or the server 3 via a network. In addition, the communication circuitry 80 may communicate with the beacons 5. The controller 200 may obtain various information, various signals, and/or various data from the user device 2 or the server 3 via the communication circuitry 80. For example, the communication circuitry 80 may receive a remote control signal from the user device 2. The controller 200 may obtain an artificial intelligence model used to analyze an image from the server 3 via the communication circuitry 80. In addition, the controller 200 may transmit information corresponding to a degree of contamination of the optical sensor S to the user device 2 via the communication circuitry 80 to allow the user device 2 to display the information corresponding to the degree of contamination of the optical sensor S.

The communication circuitry 80 may include a variety of communication circuits. The communication circuitry 80 may include wireless communication circuits and/or wired communication circuits. The wireless communication circuits may support various wireless communication, such as wireless local area network (WLAN), home radio frequency (Home RF), infrared communication, ultra-wide band (UWB) communication, wi-fi, Bluetooth, Zigbee, long range wireless network (e.g., cellular communication).

The controller 200 may identify a current location of the mobile robot 1 using simultaneous localization and mapping (SLAM) based on UWB communication. For example, the controller 200 may generate a map of a work area P using the SLAM algorithm while the mobile robot 1 is driving in the work area P, and may identify the location of the mobile robot in the work area P.

The motion sensor 90 may include at least one of a wheel sensor for detecting a rotational speed of wheel, a gyro sensor for detecting a change in posture of the main body 10, or an inertial measurement unit (IMU) for detecting an acceleration, speed, and direction of the mobile robot 1. In addition to the above, various sensors that may detect movement of the mobile robot 1 may be provided. The controller 200 may identify the movement of the mobile robot 1 based on a signal transmitted from the motion sensor 90.

The position sensor 100 may obtain location information of the mobile robot 1. For example, the position sensor 100 may include a global positioning system (GPS) receiver. The position sensor 100 may transmit an electrical signal including the location information of the mobile robot 1 to the controller 200. The controller 200 may identify the movement of the mobile robot 1 based on changes in location information obtained by the position sensor 100.

The components of the mobile robot 1 are not limited to those described above. The mobile robot 1 may further include various components in addition to the aforementioned components, and some of the aforementioned components may be omitted.

Because the above-described optical sensor S of the mobile robot 1 is exposed to the outside of the mobile robot 1, the optical sensor S may be contaminated by external objects. Contamination of the optical sensor S may cause the mobile robot 1 to incorrectly identify objects in front or to fail to identify obstacles. As a result, an accident, such as a malfunction of the mobile robot 1 or a collision of the mobile robot 1 with an obstacle may occur. Because the blade 40 for mowing grass is sharp, a user may also be injured in the event of an accident with the mobile robot 1. Accordingly, contamination of the optical sensor S is required to be detected and an appropriate action against contamination is required to be taken.

The controller 200 may obtain an image, image data, and/or an image signal from the optical sensor S. The controller 200 may identify an object in the image obtained by the optical sensor S. The controller 200 may identify a plurality of objects in the image obtained while the main body 10 is moving. The controller 200 may determine that an object detected for a predetermined period of time (e.g., 10 seconds) among the plurality of identified objects is a contaminant. At least one of the plurality of objects identified in the image may be determined to be a contaminant. The predetermined period of time for determining an object as a contaminant may be set to various values depending on the design.

In other words, the controller 200 may determine that an object that is continuously detected for a predetermined period of time in the image obtained while the main body 10 is moving is a contaminant. For example, despite the movement of the main body 10, an object showing relatively little change in characteristics in the image may be determined to be a contaminant. Because the contaminant is attached to the optical sensor S and moves together with the mobile robot 1, the characteristics of the object corresponding to the contaminant in the image hardly change even though the mobile robot 1 moves. While the mobile robot 1 is moving, changes in characteristics of objects present in a surrounding environment in the image become relatively large, whereas the change in characteristics of the contaminant in the image becomes little or relatively small. For example, in a case where at least a portion of the field of view of the optical sensor S is obscured by the contaminant, changes in at least some region of the image become relatively small compared to changes in the other region of the image.

For example, based on a size or shape of an object detected in the image being constant for a predetermined period of time while the main body 10 is moving, the controller 200 may determine the object to be a contaminant. In other words, even though the mobile robot 1 moves, the size or shape of the object corresponding to the contaminant in the image may remain almost constant. In a case where the size or shape of at least a portion of a region of the image remains constant despite the movement of the main body 10, it may be determined that contaminant is located in the portion of the region.

Based on a brightness of an object in the image remaining lower than a predetermined threshold brightness for a predetermined period of time while the main body 10 is moving, the controller 200 may determine the object to be a contaminant. Because the contaminant covers at least a portion of the lens of the optical sensor S, the brightness of at least a region in which the contaminant is located in the image may be detected to be lower than a brightness of the other region.

Based on a clarity of an object in the image remaining lower than a predetermined threshold clarity for a predetermined period of time while the main body 10 is moving, the controller 200 may determine the object to be the contaminant. In a case where the contaminant is attached to the optical sensor S, a region in which the contaminant is located in the entire region of the image generated by the optical sensor S may be out of focus. Accordingly, the clarity of the region of the contaminant in the image may be detected to be relatively low.

In addition, while the main body 10 is moving, based on a distance from a current location of the mobile robot 1 to an object being maintained less than a predetermined threshold distance for a predetermined period of time, the controller 200 may determine the object to be the contaminant. The distance from the current location of the mobile robot 1 to the object may be obtained from depth information included in the image.

In a case where the optical sensor S is a binocular camera, presence of contaminant in either the left-eye lens or the right-eye lens cause binocular disparity matching to fail, and thus a distance to a target may be output as a random value. The controller 200 may determine an object to be a contaminant, based on a distance to the object in an image obtained by the binocular camera being repeatedly output as a random value while the main body 10 is moving.

Meanwhile, the mobile robot 1 may be provided with two or more different optical sensors S. For example, as described above, the mobile robot 1 may include the first optical sensor S1 that generates a color image (first image) and a depth image (second image) including distance information to a target. The controller 200 may match the first image of the first optical sensor S1 and the second image of the second optical sensor S2, and may compare an object included in the first image and an object included in the second image. The controller 200 may determine whether the object (first object) detected in the first image and the object (second object) detected in the second image are the same or different.

Based on an object being identically detected in both the first image of the first optical sensor S1 and the second image of the second optical sensor S2, the controller 200 may determine the object to be an external object rather than a contaminant. For example, even though an object included in the first image of the first optical sensor S1 is determined to be a contaminant, in a case where the same object is also detected in the second image of the second optical sensor S2, the object is highly likely to be an external object rather than a contaminant. As such, an accuracy of contaminant determination may be improved by comparing the images obtained by the different optical sensors.

The controller 200 may determine a degree of contamination of the optical sensor S based on characteristics of the contaminant and a location of the contaminant in the image. The controller 200 may divide the image into a plurality of regions based on predetermined reference lines. The controller 200 may determine the degree of contamination of the optical sensor S to be different depending on a region in which the object determined as the contaminant is located among the plurality of regions of the image. The plurality of regions may be set differently depending on the design.

For example, the controller 200 may divide the entire region of the image obtained by the optical sensor S into a central region, a left region, a right region, an upper region, and a lower region. The controller 200 may apply the largest first weight to the central region of the image. The controller 200 may apply a second weight less than the first weight to the left and right regions of the image. The controller 200 may apply a third weight less than the second weight to the upper and lower regions of the image. The controller 200 may determine that the degree of contamination of the optical sensor S is higher, as a weight of a region in which the object is located increases.

In general, the field of view (FOV) of the optical sensor S is designed to have an area larger than a size of the mobile robot 1. An area of the central region of the image may be set to correspond to the size of the mobile robot 1. The optical sensor S captures a front of the mobile robot 1, and the mobile robot 1 moves forward along a travel path. Among the regions of the image obtained by the optical sensor S, a region that has a significant influence on the driving of the mobile robot 1 may be the central region. Because an object detected in the central region of the image obtained by the optical sensor S corresponds to an object on the travel path of the mobile robot 1, an operation of the mobile robot 1 may change depending on what the object detected in the central region of the image is. Accordingly, the central region is required to be processed most importantly from among the plurality of regions of the image, and thus the greatest weight may be assigned to the central region.

In other words, among the plurality of regions of the image, the region that most affects the straight driving of the mobile robot 1 may be the central region. In addition, in a case where the mobile robot 1 is required to change its driving direction to the left or right, an operation of the mobile robot 1 may change depending on which object is detected in the left or right region of the image. On the other hand, an object detected in the upper region of the image may actually be located above the mobile robot 1, and an object detected in the lower region of the image may be located below a lower surface of the mobile robot 1. For example, the object detected in the upper region or the lower region of the image may not affect the driving of the mobile robot 1. Accordingly, the left and right regions of the image require to be processed more importantly than the upper and lower regions of the image.

The controller 200 may determine the degree of contamination of the optical sensor S considering not only the region where the contaminant is located in the image but also the characteristics of the contaminant. For example, the characteristics of the contaminant may include at least one of the size of the contaminant or transparency of the contaminant. The controller 200 may determine that the degree of contamination of the optical sensor S is higher, as the size of the contaminant increases. As the size of the contaminant increases, the contaminant largely blocks the field of view of the optical sensor S, and thus the degree of contamination may be determined to be high. The controller 200 may determine that the degree of contamination of the optical sensor S is higher as the transparency of the contaminant decreases. The more opaque the contaminant, the less light may pass through the contaminant, and thus at least a region where the contaminant is located in the image becomes dark.

In addition, the controller 200 may determine that the degree of contamination of the optical sensor S is higher, as the brightness of the contaminant decreases. The controller 200 may determine that the degree of contamination of the optical sensor S is higher, as the clarity of the contaminant decreases.

A plurality of objects that are determined to be contaminants may be present in the image. The controller 200 may determine the degree of contamination of the optical sensor S considering both weights of the regions where each of the plurality of contaminants is located in the image and the characteristics of each of the plurality of contaminants.

The controller 200 of the mobile robot 1 may provide information corresponding to the degree of contamination of the optical sensor S via at least one of the user interface 70 or the user device 2. The information corresponding to the degree of contamination of the optical sensor S may include at least one of visual information or auditory information. The visual information may be provided via the indicator 73 and the display 71 of the user interface 70. The auditory information may be provided via the speaker 72 of the user interface 70.

The controller 200 may determine an operation mode of the mobile robot 1 based on the degree of contamination of the optical sensor S. The operation mode of the mobile robot 1 may be determined as a normal mode, a standby mode, or a cleaning mode. The normal mode may be set to allow the mobile robot 1 to cut grass normally. The standby mode may be set to allow the mobile robot 1 to stop cutting the grass and stand by. The cleaning mode may be set to allow the mobile robot 1 to stop cutting the grass and return to the charging station 4.

For example, based on the degree of contamination of the optical sensor S being lower than a threshold level, the controller 200 may provide a contamination notification for notifying the contamination of the optical sensor S via at least one of the user interface 70 or the user device 2, and may determine the operation mode of the mobile robot 1 as the normal mode. The threshold level may be set differently depending on the design. In a case where the degree of contamination of the optical sensor S is lower than the threshold level, the mobile robot 1 may move normally. Accordingly, the mobile robot 1 may inform a user that contamination of the optical sensor S has occurred and may continue moving to cut the grass.

In a case where the degree of contamination of the optical sensor S is lower than the threshold level, the controller 200 may control the wheel motor 30 to adjust a travel speed of the mobile robot 1 according to the degree of contamination of the optical sensor S. The controller 200 may reduce the travel speed of the mobile robot 1 as the degree of contamination of the optical sensor S increases.

In a case where the degree of contamination of the optical sensor S is higher than or equal to the threshold level, the mobile robot 1 may not be able to identify an object located in front, and may therefore deviate from the travel path or collide with the object. Based on the degree of contamination of the optical sensor S being higher than or equal to the threshold level, the controller 200 may provide a hazard alert for notifying a driving hazard via at least one of the user interface 70 or the user device 2, and may determine the operation mode of the mobile robot 1 as the standby mode or cleaning mode.

The mobile robot 1 may stop driving and enter the standby mode by stopping an operation of the wheel motor 30 and the blade motor 40a. By entering the standby mode, the controller 200 may maintain the standby mode until the contaminant is removed from the optical sensor S. A user may directly remove the contaminant from the optical sensor S or may dock the mobile robot 1 to the charging station 4. The charging station 4 may perform cleaning of the optical sensor S upon docking of the mobile robot 1.

The controller 200 of the mobile robot 1 may determine to return to the charging station 4 according to an entry into the cleaning mode. For example, by entering the cleaning mode, the controller 200 may stop an operation of the blade motor 40a and control the wheel motor 30 to move the mobile robot 1 to the charging station 4. An accident may occur while the mobile robot 1 is returning to the charging station 4 due to the contamination of the optical sensor S. The controller 200 may provide a notification of the return of the mobile robot 1 via at least one of the user interface 70 or the user device 2 until the docking between the mobile robot 1 and the charging station 4 is completed.

The controller 200 may determine whether the optical sensor S is contaminated by analyzing the image obtained by the optical sensor S at predetermined intervals. In response to no object determined as a contaminant being identified in the image, the controller 200 may determine that the contamination of the optical sensor S has been removed. Based on the object determined as a contaminant not being identified in the image, the controller 200 may provide a contamination removal notification via at least one of the user interface 70 or the user device 2, and may change the operation mode of the mobile robot to the normal mode.

As such, the mobile robot 1 according to the disclosure may take appropriate actions to respond to the contamination of the optical sensor S, thereby preventing an incorrect operation and an accident of the mobile robot 1 due to the contamination of the optical sensor S.

Meanwhile, despite the contamination of the optical sensor S, a user may desire to continue cutting grass with the mobile robot 1. After the mobile robot 1 enters the standby mode or the cleaning mode, a command to continue operation (operation continuation command) may be input via the user interface 70 or the user device 2. The controller 200 may change the operation mode of the mobile robot 1 from the standby mode or the cleaning mode to the normal mode, based on obtaining the operation continuation command. In addition, according to the operation continuation command, the controller 200 may change the threshold level of the degree of contamination to be higher than a current degree of contamination of the optical sensor S. As a result, even in a case where the degree of contamination of the optical sensor S corresponds to a current degree of contamination in the future, a hazard alert may not be provided and the mobile robot 1 may not enter the standby mode or the cleaning mode.

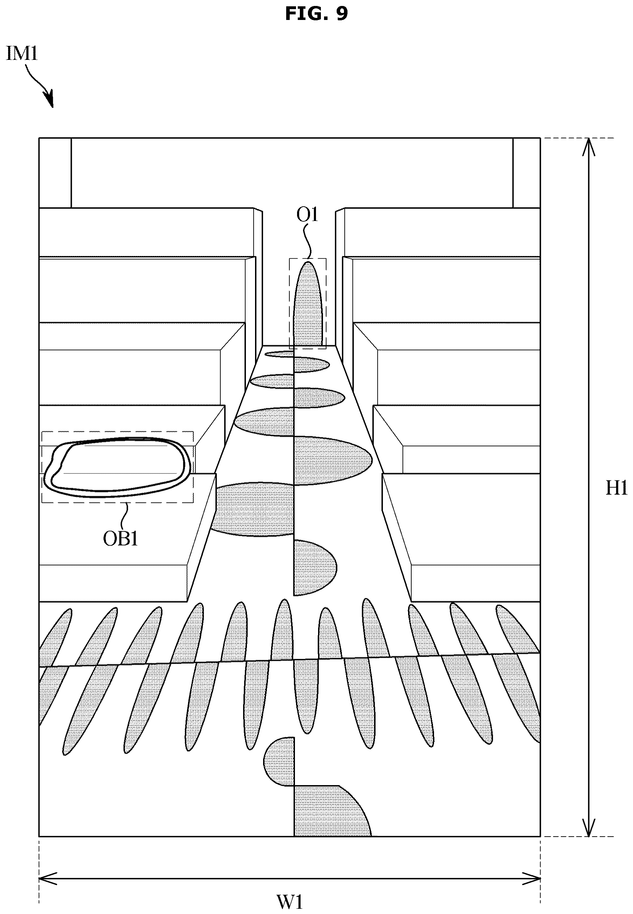

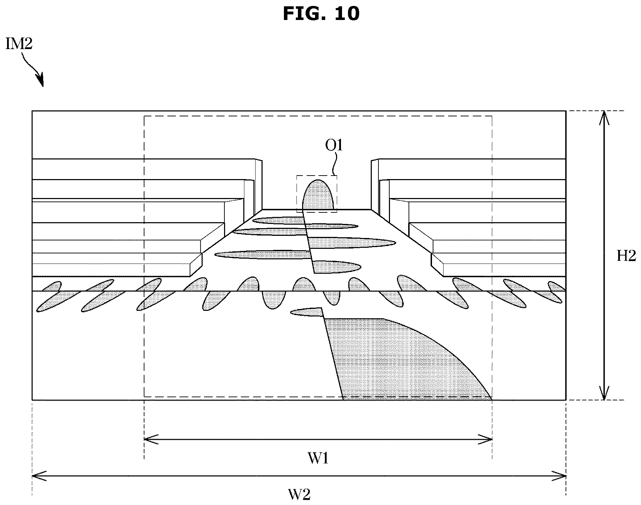

FIG. 9 illustrates an image obtained by a first optical sensor according to an embodiment of the disclosure. FIG. 10 illustrates an image obtained by a second optical sensor according to an embodiment of the disclosure.

Referring to FIG. 9, the first optical sensor S1 may obtain a first image IM1. According to a predetermined first FOV of the first optical sensor S1 and a size of a first image sensor included in the first optical sensor S1, the first image IM1 may have a first width W1 and a first height H1. For example, the first image IM1 may have a vertically long rectangular frame.

Referring to FIG. 10, the second optical sensor S2 may obtain a second image IM2. According to a predetermined second FOV of the second optical sensor S2 and a size of a second image sensor included in the second optical sensor S2, the second image IM2 may have a second width W2 and a second height H2. For example, the second image IM2 may have a horizontally long rectangular frame.

The controller 200 of the mobile robot 1 may match the first image IM1 of the first optical sensor S1 and the second image IM2 of the second optical sensor S2, and may compare an object included in the first image IM1 and an object included in the second image IM2. In order to match the first image IM1 and the second image IM2, the controller 200 may perform at least one of a cropping process to cut out a portion of the image or a rescaling process of the image. For example, the second width W2 of the second image IM2 may be greater than the first width W1 of the first image IM1, and the second height H2 of the second image IM2 may be less than the first height H1 of the first image IM1. The controller 200 may crop a partial region of the second image IM2 corresponding to the first width W1 of the first image IM1 and match the cropped partial region of the second image IM2 with the first image IM1. The controller 200 may determine whether an object (first object) detected from the first image IM1 and an object (second object) detected from the second image IM2 are the same or different.

While the mobile robot 1 is moving, the controller 200 may detect an object that has no characteristic change or has a relatively small characteristic change in each of the first image IM1 and the second image IM2. For example, despite the movement of the mobile robot 1, it may be detected that characteristics of the objects indicated as OB1 and O1 in the first image IM1 do not change. Accordingly, the controller 200 may determine that both the OB1 and the O1 detected in the first image IM1 are contaminants.

However, the controller 200 may also detect an object corresponding to the object O1 of the first image IM1 in the second image IM2. In this case, the controller 200 may determine that the object O1 is an external object rather than a contaminant. An object located far from the mobile robot 1 (for example, objects near a vanishing point of an image) may show relatively small changes in the image even in a case where the mobile robot 1 moves. Determining such an object as a contaminant may reduce reliability of the contaminant determination. By comparing images obtained by the different optical sensors, an accuracy of contaminant determination may be improved.

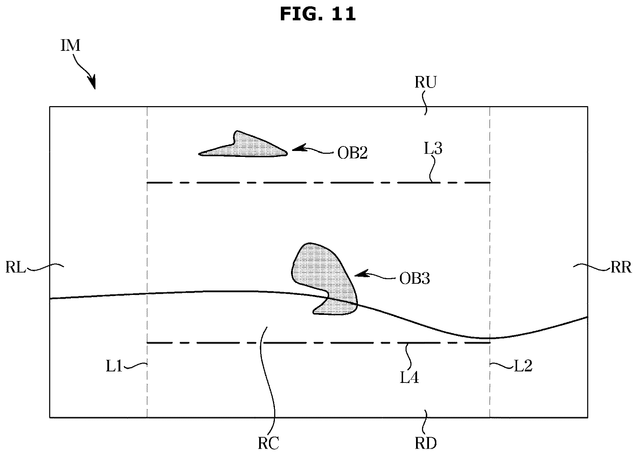

FIG. 11 illustrates an image generated by an optical sensor being divided into a plurality of regions according to an embodiment of the disclosure.

Referring to FIG. 11, the controller 200 of the mobile robot 1 may divide an image IM obtained by the optical sensor S into a plurality of regions RC, RL, RR, RU, and RL. The image IM of FIG. 11 may correspond to the second image IM2 of FIG. 10 .

The controller 200 may divide the image IM into the plurality of regions based on predetermined reference lines L1, L2, L3, and L4. For example, by the left vertical line L1, the right vertical line L2, the upper horizontal line L3, and the lower horizontal line L4, the image IM may be divided into the central region RC, the left region RL, the right region RR, the upper region RU, and the lower region RL.

Referring to FIG. 11, an object OB2 located in the upper region RU of the image IM may be determined as a contaminant, and an object OB3 located in the central region RC of the image IM may be determined as a contaminant. The controller 200 may determine a degree of contamination of the optical sensor S based on a weight of the central region RC, a weight of the upper region RU, a characteristic of the object OB2, and a characteristic of the object OB3. Because the weight of the upper region RU is relatively low and a size of the object OB2 is also relatively small, the object OB2 may be ignored in determining the degree of contamination of the optical sensor S.

However, because the weight of the central region RC is the greatest and a size of the object OB3 located in the central region RC is also relatively large, the degree of contamination of the optical sensor S may be determined to be higher than a threshold level. In this case, the mobile robot 1 may provide a hazard alert for notifying a driving hazard via at least one of the user interface 70 or the user device 2. In addition, the operation mode of the mobile robot 1 may be changed to the standby mode or the cleaning mode.

FIG. 11 illustrates a method of determining a degree of contamination of optical sensor S robot according to an embodiment of the disclosure. The degree of contamination of the optical sensor S may be determined variously depending on the situation.

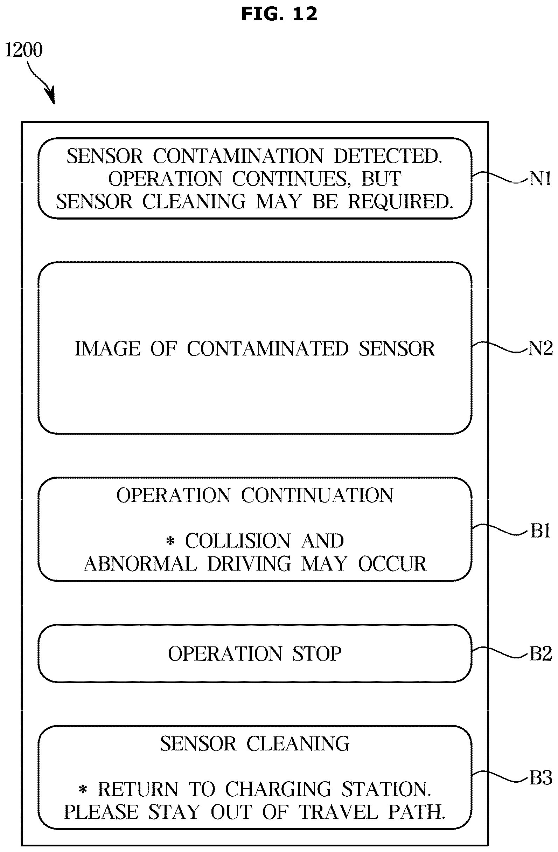

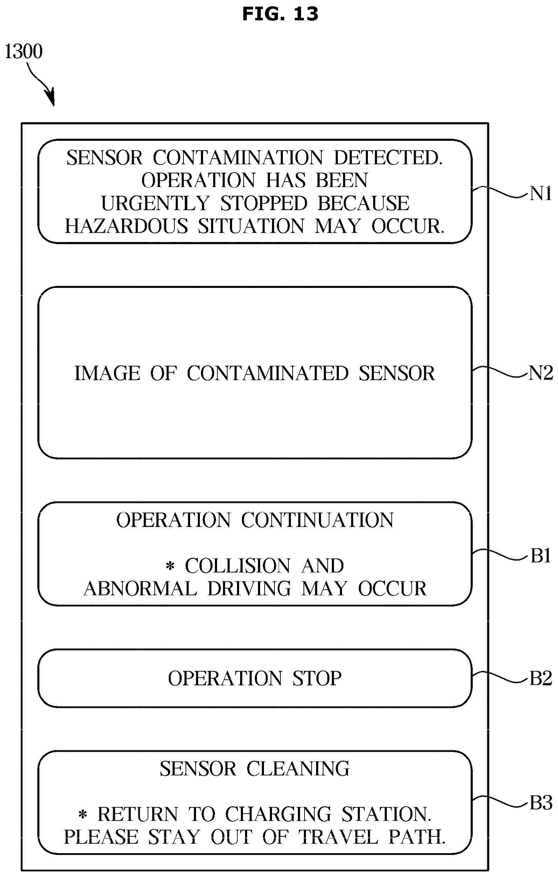

FIG. 12 illustrates information being provided via a user device or a user interface of a mobile robot according to an embodiment of the disclosure. FIG. 13 illustrates information being provided via a user device or a user interface of a mobile robot according to an embodiment of the disclosure.

A first screen 1200 shown in FIG. 12 and a second screen 1300 shown in FIG. 13 may be displayed on the display 71 of the mobile robot 1 or the user device 2. Referring to FIGS. 12 and 13, the first screen 1200 and the second screen 1300 include a notification box N1 for displaying contamination information of the optical sensor S and operation information corresponding thereto, and an image box N2 for displaying an image obtained by the optical sensor S. An image including a contaminant may be displayed in the image box N2.

In a case where the degree of contamination of the optical sensor S is lower than a threshold level, a contamination notification may be displayed in the notification box N1 to notify the occurrence of contamination of the optical sensor S and a normal operation of the mobile robot 1, as shown in the first screen 1200. For example, the contamination notification may be provided as a text message, such as "Sensor contamination detected. Operation continues, but sensor cleaning may be required. "

In a case where the degree of contamination of the optical sensor S is higher than or equal to the threshold level, a hazard alert may be displayed in the notification box N1 to notify that driving is dangerous and the mobile robot 1 stops operation and enters the standby mode, as shown in the second screen 1300. For example, the hazard alert may be provided as a text message, such as "Sensor contamination detected. Operation has been urgently stopped because a hazardous situation may occur."

In addition, the first screen 1200 and the second screen 1300 may include an operation continuation button B1 for inputting a command to continue an operation of the mobile robot 1, and an operation stop button B2 for inputting a command to stop an operation of the mobile robot 1, and a sensor cleaning button B3 for inputting a command to clean a sensor.

In response to obtaining a user input (e.g., touch input) through the operation continuation button B1 after the mobile robot 1 enters the standby mode or cleaning mode, the controller 200 of the mobile robot 1 may change the operation mode of the mobile robot 1 to the normal mode. In a case where the operation mode of the mobile robot 1 is forcibly changed to the normal mode according to the user input via the operation continuation button B1, a collision or abnormal driving warning may be displayed on the operation continuation button B1.

In response to obtaining a user input via the operation stop button B2 while the mobile robot 1 is operating in the normal mode, the controller 200 may determine the operation mode of the mobile robot 1 to be the standby mode. In response to obtaining a user input via the sensor cleaning button B3, the controller 200 may determine the operation mode of the mobile robot 1 to be the cleaning mode. In response to entering the cleaning mode, a notification of the return of the mobile robot 1 may be displayed on the sensor cleaning button B3.

In addition to those shown in FIGS. 12 and 13, various information may be provided via the user interface 70 of the mobile robot 1 and the user device 2. For example, in a case where contamination of the optical sensor S is removed, a contamination removal notification may be displayed in the notification box N1.

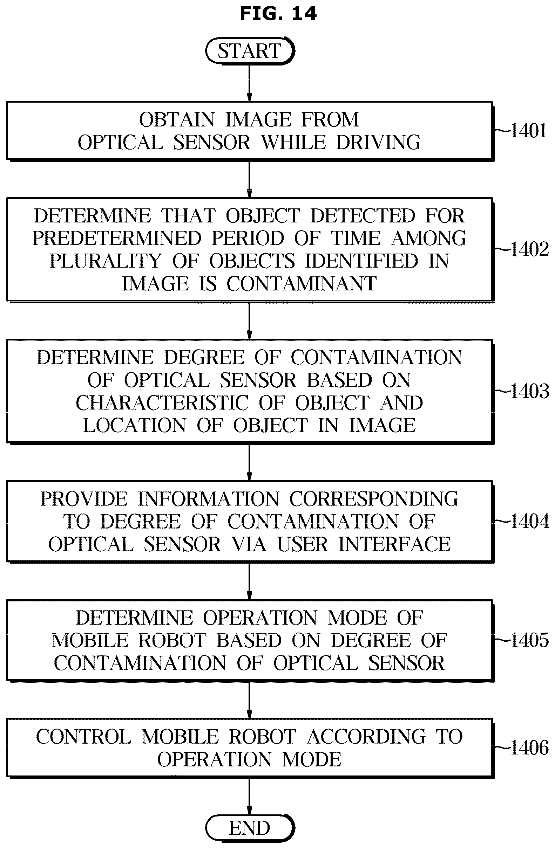

FIG. 14 is a flowchart illustrating a control method of a mobile robot according to an embodiment of the disclosure.

Referring to FIG. 14, the controller 200 of the mobile robot 1 may obtain an image from the optical sensor S at operation 1401 while the mobile robot 1 is driving. The controller 200 may identify a plurality of objects in the image and determine that an object detected for a predetermined period of time among the identified plurality of objects is a contaminant at operation 1402. The controller 200 may determine a degree of contamination of the optical sensor S based on a characteristic of the contaminant and a location of the contaminant in the image at operation 1403.

The controller 200 may provide information corresponding to the degree of contamination of the optical sensor S via the user interface 70 at operation 1404. The information corresponding to the degree of contamination of the optical sensor S may include at least one of visual information or auditory information. The visual information may include at least one of an image, text, or graphic element displayed via the display 71. The visual information may also include a color of the indicator 73. The auditory information may include at least one of sound or voice provided via the speaker 72. The controller 200 may transmit the information to the user device 2 to allow the user device 2 to output the information corresponding to the degree of contamination of the optical sensor S.

The controller 200 may determine an operation mode of the mobile robot 1 based on the degree of contamination of the optical sensor S at operation 1405. The operation mode of the mobile robot 1 may be determined as a normal mode, a standby mode, or a cleaning mode. The controller 200 may control the mobile robot 1 according to the determined operation mode at operation 1406.

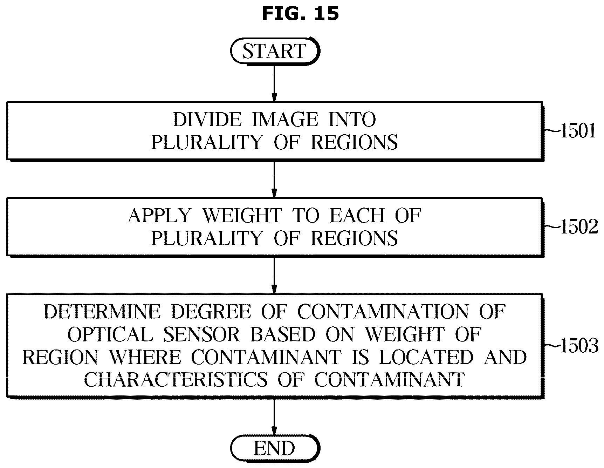

FIG. 15 is a flowchart illustrating a method of determining a degree of contamination of an optical sensor described in FIG. 14 according to an embodiment of the disclosure.

Referring to FIG. 15, in order to determine the degree of contamination of the optical sensor S according to a location of object in the image, the controller 200 of the mobile robot 1 may divide the image into a plurality of regions based on predetermined reference lines at operation 1501. For example, the controller 200 may divide an entire region of the image obtained by the optical sensor S into a central region, a left region, a right region, an upper region, and a lower region. The controller 200 may determine the degree of contamination of the optical sensor S to be different depending on a region in which the object determined as a contaminant is located among the plurality of regions of the image.

The controller 200 may apply a weight to each of the plurality of regions of the image at operation 1502. The controller 200 may apply the largest first weight to the central region of the image. The controller 200 may apply a second weight less than the first weight to the left and right regions of the image. The controller 200 may apply a third weight less than the second weight to the upper and lower regions of the image.

The controller 200 may determine the degree of contamination of the optical sensor S based on the weight of the region where the contaminant is located and characteristics of the contaminant at operation 1503. The controller 200 may determine that the degree of contamination of the optical sensor S is higher as the weight of the region where the contaminant is located increases. The characteristic of the contaminant considered in determining the degree of contamination of the optical sensor S may include at least one of a size or a transparency of the object. The controller 200 may determine that the degree of contamination of the optical sensor S is higher as the size of the contaminant increases. The controller 200 may determine that the degree of contamination of the optical sensor S is higher as the transparency of the contaminant decreases. In addition, the controller 200 may determine that the degree of contamination of the optical sensor S is higher as a brightness of the contaminant decreases. The controller 200 may determine that the degree of contamination of the optical sensor S is higher as a clarity of the contamination decreases.

A plurality of objects that are determined to be contaminants may be present in the image. The controller 200 may determine the degree of contamination of the optical sensor S considering both weights of the regions where each of the plurality of contaminants is located in the image and the characteristics of each of the plurality of contaminants.

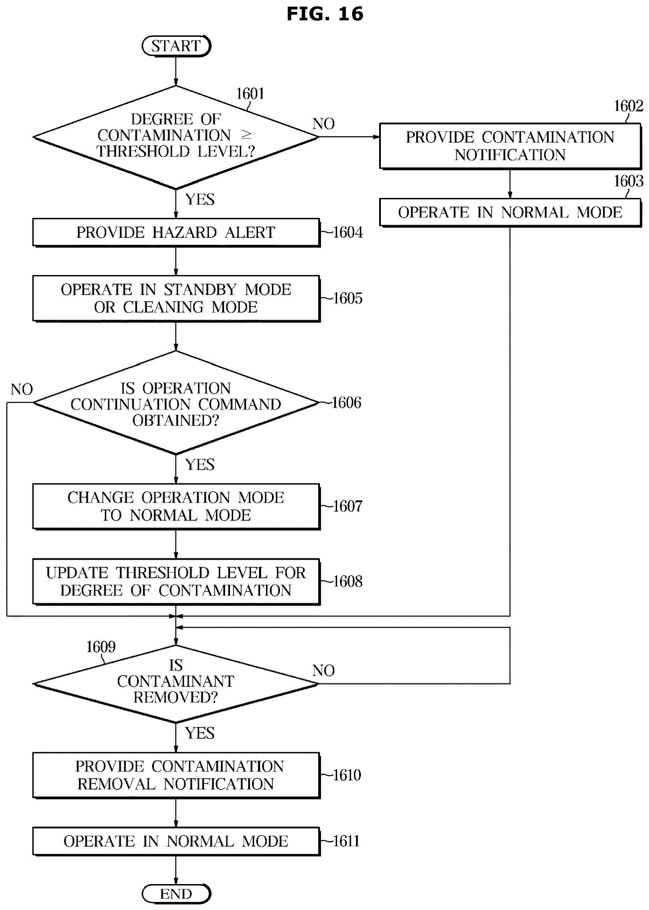

FIG. 16 is a flowchart illustrating an operation of a mobile robot according to a degree of contamination of an optical sensor described in FIG. 14 according to an embodiment of the disclosure.

Referring to FIG. 16, the controller 200 of the mobile robot 1 may determine whether the degree of contamination of the optical sensor S is lower than a threshold level, higher than the threshold level, or equal to the threshold level at operation 1601.

Based on the degree of contamination of the optical sensor S being lower than the threshold level, the controller 200 may provide a contamination notification to notify the occurrence of contamination of the optical sensor S via at least one of the user interface 70 or the user device 2 at operation 1602, and may determine an operation mode of the mobile robot 1 as a normal mode at operation 1603.

Based on the degree of contamination of the optical sensor S being higher than or equal to the threshold level, the controller 200 may provide a hazard alert to notify a driving hazard via at least one of the user interface 70 or the user device 2 at operation 1604, and may determine the operation mode of the mobile robot 1 as a standby mode or a cleaning mode at operation 1605.

In response to obtaining an operation continuation command via the user interface 70 or the user device 2 at operation 1606 after the mobile robot 1 enters the standby mode or the cleaning mode, the controller 200 may change the operation mode of the mobile robot 1 to the normal mode at operation 1607. In addition, the controller 200 may update the threshold level for the degree of contamination at operation 1608. For example, the controller 200 may change the threshold level for the degree of contamination to be higher than a current degree of contamination of the optical sensor S.

The controller 200 may identify whether the contaminant have been removed from the image of the optical sensor S at operation 1609. In a case where the object determined as a contaminant is not identified in the image, the controller 200 may determine that the contamination of the optical sensor S has been removed. Based on no contaminant being identified in the image, the controller 200 may provide a contamination removal notification via at least one of the user interface 70 or the user device 2 at operation 1610, and may change the operation mode of the mobile robot to the normal mode. Accordingly, the mobile robot 1 may operate in the normal mode at operation 1611.

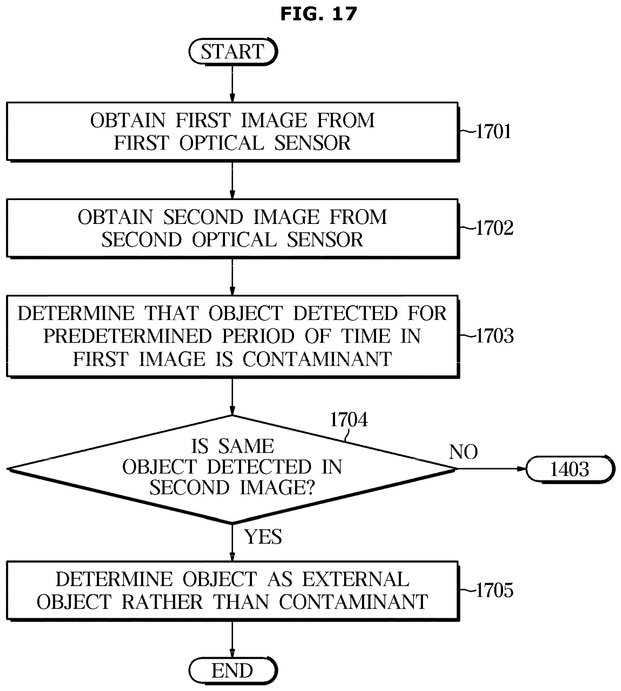

FIG. 17 illustrates a further embodiment of a method for estimating a contaminant in an image described in FIG. 14 according to an embodiment of the disclosure.

As described above, the mobile robot 1 may be provided with two or more different optical sensors S. For example, the mobile robot 1 may include the first optical sensor S1 generating a first image and the second optical sensor S2 generating a second image.

Referring to FIG. 17, while the mobile robot 1 is moving, the controller 200 of the mobile robot 1 may obtain the first image from the first optical sensor S1 at operation 1701, and may obtain the second image from the second optical sensor S2 at operation 1702. The controller 200 may determine that an object detected for a predetermined period of time in the first image of the first optical sensor S1 is a contaminant at operation 1703.

The controller 200 may match the first image of the first optical sensor S1 and the second image of the second optical sensor S2, and may compare an object included in the first image and an object included in the second image. The controller 200 may determine whether the object determined as a contaminant in the first image is also detected in the second image of the second optical sensor S2 at operation 1704.

Based on the object determined as a contaminant in the first image being also detected in the second image, the controller 200 may determine that the object determined as a contaminant in the first image is an external object rather than a contaminant at operation 1705. In a case where the object determined as a contaminant in the first image is not detected in the second image, the controller 200 may determine that contamination has occurred in the first optical sensor S1, and may determine the degree of contamination of the first optical sensor S1 at operation 1403.

According to an embodiment of the disclosure, a mobile robot may include a main body 10, a plurality of wheels 20a, 20b, 20c, and 20d mounted on the main body, a blade 40 mounted on the main body to cut grass, an optical sensor S configured to generate an image with a field of view facing a front of the main body, a user interface 70 configured to obtain a user input and provide information about an operation of the mobile robot; and at least one processor 210. The at least one processor 210 may be configured to identify a plurality of objects from the image obtained while the main body moves. The at least one processor 210 may be configured to determine an object detected for a predetermined period of time among the plurality of identified objects to be a contaminant. The at least one processor 210 may be configured to determine a degree of contamination of the optical sensor based on a characteristic of the contaminant and a location of the contaminant in the image. The at least one processor 210 may be configured to provide information corresponding to the degree of contamination of the optical sensor via the user interface. The at least one processor 210 may be configured to determine an operation mode of the mobile robot based on the degree of contamination of the optical sensor.

Based on the degree of contamination of the optical sensor being lower than a threshold level, the at least one processor may be configured to provide a contamination notification for notifying an occurrence of contamination on the optical sensor via the user interface and determine the operation mode of the mobile robot as a normal mode.

Based on the degree of contamination of the optical sensor being higher than or equal to a threshold level, the at least one processor may be configured to provide a hazard alert for notifying a driving hazard via the user interface and determine the operation mode of the mobile robot as a standby mode or a cleaning mode.

Based on an operation continuation command input via the user interface, the at least one processor may be configured to change the operation mode of the mobile robot from the standby mode or the cleaning mode to the normal mode and change the threshold level to be higher than the determined degree of contamination of the optical sensor.

The at least one processor may be configured to provide a contamination removal notification via the user interface and determine the operation mode of the mobile robot as a normal mode, based on the object determined as the contaminant not being identified in the image.

The at least one processor may be configured to divide the image into a plurality of regions based on predetermined reference lines, and determine the degree of contamination of the optical sensor differently depending on a region where the contaminant is located among the plurality of regions.

The at least one processor may be configured to apply a largest first weight to a central region of the image, apply a second weight less than the first weight to a left region and a right region of the image, apply a third weight less than the second weight to an upper region and a lower region of the image, and determine that the degree of contamination of the optical sensor is higher, as a weight of the region where the contaminant is located increases.

The characteristic of the contaminant may include at least one of a size of the contaminant or a transparency of the contaminant, and the at least one processor may be configured to determine that the degree of contamination of the optical sensor is higher, as the size of the contaminant increases or the transparency of the contaminant decreases.

The optical sensor may include a first optical sensor configured to generate a color image, and a second optical sensor configured to generate a depth image including distance information to a target. The at least one processor may be configured to determine that the object is a foreign object rather than the contaminant, based on the object being detected identically in both the color image of the first optical sensor and the depth image of the second optical sensor.

The at least one processor may be configured to provide at least one of visual information or auditory information corresponding to the degree of contamination of the optical sensor via the user interface.

The mobile robot may further include a communication circuitry configured to communicate with an external device. The at least one processor may be configured to transmit the information corresponding to the degree of contamination of the optical sensor to a user device via the communication circuitry to allow the information to be displayed on the user device.

According to an embodiment of the disclosure, a method of controlling a mobile robot may include detecting a plurality of objects from an image obtained by an optical sensor while the mobile robot moves, determining an object detected for a predetermined period of time among the plurality of objects to be a contaminant, determining a degree of contamination of the optical sensor based on a characteristic of the contaminant and a location of the contaminant in the image, providing information corresponding to the degree of contamination of the optical sensor via the user interface, and determining an operation mode of the mobile robot based on the degree of contamination of the optical sensor.

Based on the degree of contamination of the optical sensor being lower than a threshold level, the information corresponding to the degree of contamination of the optical sensor may be provided as a contamination notification for notifying an occurrence of contamination on the optical sensor, and the operation mode of the mobile robot may be determined as a normal mode.

Based on the degree of contamination of the optical sensor being higher than or equal to a threshold level, the information corresponding to the degree of contamination of the optical sensor may be provided as a hazard alert for notifying a driving hazard, and the operation mode of the mobile robot may be determined as a standby mode or a cleaning mode.

Based on an operation continuation command input via the user interface, the method may further include changing the operation mode of the mobile robot from the standby mode or the cleaning mode to a normal mode and changing the threshold level to be higher than the determined degree of contamination of the optical sensor.

Based on the object determined as the contaminant not being identified in the image, the information corresponding to the degree of contamination of the optical sensor may be provided as a contamination removal notification, and the operation mode of the mobile robot may be determined as a normal mode.

The determining of the degree of contamination of the optical sensor may include: dividing the image into a plurality of regions based on predetermined reference lines, and determining the degree of contamination of the optical sensor differently depending on a region where the contaminant is located among the plurality of regions.

The determining of the degree of contamination of the optical sensor may include: applying a largest first weight to a central region of the image; applying a second weight less than the first weight to a left region and a right region of the image; applying a third weight less than the second weight to an upper region and a lower region of the image; and determining that the degree of contamination of the optical sensor is higher, as a weight of the region where the contaminant is located increases.

The characteristic of the contaminant may include at least one of a size of the contaminant or a transparency of the contaminant, and the determining of the degree of contamination of the optical sensor may include determining that the degree of contamination of the optical sensor is higher, as the size of the contaminant increases or the transparency of the contaminant decreases.

The optical sensor may include a first optical sensor configured to generate a color image, and a second optical sensor configured to generate a depth image including distance information to a target. The method may further include determining that the object is a foreign object rather than the contaminant, based on the object being detected identically in both the color image of the first optical sensor and the depth image of the second optical sensor.

As is apparent from the above, the mobile robot, the method and system for the mobile robot may detect contamination of an optical sensor exposed to an external environment and take appropriate actions in response to the contamination of the optical sensor. Thus, malfunctions and accidents of the mobile robot due to the contamination of the optical sensor may be prevented.

The disclosed embodiments may be implemented in the form of a recording medium that stores instructions executable by a computer. The instructions may be stored in the form of program codes, and when executed by a processor, the instructions may create a program module to perform operations of the disclosed embodiments.

The machine-readable storage medium may be provided in the form of a non-transitory storage medium. Here, when a storage medium is referred to as "non-transitory", it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

According to an embodiment of the disclosure, the method according to the various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a storage medium, such as memory of a server of a manufacturer, a server of an application store, or a relay server.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A mobile robot comprising:
a main body;
a plurality of wheels mounted on the main body;
a blade mounted on the main body to cut grass;
an optical sensor configured to generate an image with a field of view facing a front of the main body;
a user interface configured to obtain a user input and provide information about an operation of the mobile robot;
and
at least one processor configured to control the plurality of wheels, the blade, the optical sensor, and the user interface,
wherein the at least one processor is configured to:
detect a plurality of objects from the image obtained while the main body moves,
determine an object detected for a predetermined period of time among the plurality of detected objects to be a contaminant,
determine a degree of contamination of the optical sensor based on a characteristic of the contaminant and a location of the contaminant in the image,
provide information corresponding to the degree of contamination of the optical sensor via the user interface, and
determine an operation mode of the mobile robot based on the degree of contamination of the optical sensor.

2. The mobile robot of claim 1, wherein the at least one processor is configured to, based on the degree of contamination of the optical sensor being lower than a threshold level:
provide a contamination notification for notifying an occurrence of contamination on the optical sensor via the user interface, and
determine the operation mode of the mobile robot as a normal mode.

3. The mobile robot of claim 1, wherein the at least one processor is configured to, based on the degree of contamination of the optical sensor being higher than or equal to a threshold level:
provide a hazard alert for notifying a driving hazard via the user interface, and
determine the operation mode of the mobile robot as a standby mode or a cleaning mode.

4. The mobile robot of claim 3, wherein the at least one processor is configured to, based on an operation continuation command input via the user interface:
change the operation mode of the mobile robot from the standby mode or the cleaning mode to the normal mode, and
change the threshold level to be higher than the determined degree of contamination of the optical sensor.

5. The mobile robot of claim 1, wherein the at least one processor is configured to, based on the object determined as the contaminant not being identified in the image:
provide a contamination removal notification via the user interface, and
determine the operation mode of the mobile robot as a normal mode.

6. The mobile robot of claim 1, wherein the at least one processor is configured to:
divide the image into a plurality of regions based on predetermined reference lines, and
determine the degree of contamination of the optical sensor differently depending on a region where the contaminant is located among the plurality of regions.

7. The mobile robot of claim 6, wherein the at least one processor is configured to:
apply a largest first weight to a central region of the image,
apply a second weight less than the largest first weight to a left region and a right region of the image,
apply a third weight less than the second weight to an upper region and a lower region of the image, and
determine that the degree of contamination of the optical sensor is higher, as a weight of the region where the contaminant is located increases.

8. The mobile robot of claim 1,
wherein the characteristic of the contaminant includes at least one of a size of the contaminant or a transparency of the contaminant, and
wherein the at least one processor is configured to determine that the degree of contamination of the optical sensor is higher, as the size of the contaminant increases or the transparency of the contaminant decreases.

9. The mobile robot of claim 1,
wherein the optical sensor comprises:
a first optical sensor configured to generate a color image, and
a second optical sensor configured to generate a depth image including distance information to a target, and
wherein the at least one processor is configured to determine that the object is a foreign object rather than the contaminant, based on the object being detected identically in both the color image of the first optical sensor and the depth image of the second optical sensor.

10. The mobile robot of claim 1, wherein the at least one processor is configured to provide at least one of visual information or auditory information corresponding to the degree of contamination of the optical sensor via the user interface.

11. The mobile robot of claim 1, further comprising:
a communication circuitry configured to communicate with an external device,
wherein the at least one processor is configured to transmit the information corresponding to the degree of contamination of the optical sensor to a user device via the communication circuitry to allow the information to be displayed on the user device.

12. A method performed by a mobile robot, the method comprising:
detecting a plurality of objects from an image obtained by an optical sensor of the mobile robot while the mobile robot moves, the optical sensor having a field of view facing a front of a main body of the mobile robot; determining an object detected for a predetermined period of time among the plurality of objects to be a contaminant;
determining a degree of contamination of the optical sensor based on a characteristic of the contaminant and a location of the contaminant in the image;
providing information corresponding to the degree of contamination of the optical sensor via a user interface of the mobile robot; and
determining an operation mode of the mobile robot based on the degree of contamination of the optical sensor.

13. The method of claim 12,
wherein, based on the degree of contamination of the optical sensor being lower than a threshold level, the information corresponding to the degree of contamination of the optical sensor is provided as a contamination notification for notifying an occurrence of contamination on the optical sensor, and
wherein the operation mode of the mobile robot is determined as a normal mode.

14. The method of claim 12,
wherein, based on the degree of contamination of the optical sensor being higher than or equal to a threshold level, the information corresponding to the degree of contamination of the optical sensor is provided as a hazard alert for notifying a driving hazard, and
wherein the operation mode of the mobile robot is determined as a standby mode or a cleaning mode.

15. The method of claim 14, further comprising:
based on an operation continuation command input via the user interface, changing the operation mode of the mobile robot from the standby mode or the cleaning mode to a normal mode; and
changing the threshold level to be higher than the determined degree of contamination of the optical sensor.
